# EUROPÄISCHE PATENTSCHRIFT

(11) **EP 2 907 226 B1**
(45) Veröffentlichungstag und Bekanntmachung des Hinweises auf die Patenterteilung: **19.05.2021**
(21) Anmeldenummer: 13777268.7
(22) Anmeldetag: 14.10.2013
(51) Int. Cl.: H02K 7/04, H02K 15/16

(54) **ROTORANORDNUNG FÜR EINE ELEKTRISCHE MASCHINE**
ROTOR ASSEMBLY FOR AN ELECTRIC MACHINE
ENSEMBLE ROTOR POUR UNE MACHINE ÉLECTRIQUE

(30) Priorität: 15.10.2012 DE 102012218716
(43) Veröffentlichungstag der Anmeldung: 19.08.2015
(73) Patentinhaber: Vitesco Technologies GmbH, 30165 Hannover (DE)
(72) Erfinder: RADWAINSKI, Matti, 10553 Berlin (DE)
(86) Internationale Anmeldenummer: PCT/EP2013/071395
(87) Internationale Veröffentlichungsnummer: WO 2014/060339

(56) Entgegenhaltungen:
- EP-A2- 0 168 055
- JP-A- 2002 010 588
- US-A1- 2009 115 281
- US-A1- 2011 074 240

## Beschreibung

Rotoranordnung für eine elektrische Maschine.

Die vorliegende Erfindung betrifft eine Rotoranordnung für eine elektrische Maschine, beziehungsweise einen Elektromotor. Ferner umfasst die Erfindung eine elektrische Maschine mit einer genannten Rotoranordnung.

Eine elektrische Maschine, insbesondere eine elektrische Maschine zum Antrieb eines Hybrid- oder Elektrofahrzeugs, weist in der Regel einen Rotor auf, welcher während des Betriebs der elektrischen Maschine häufig über eine Drehzahl von 15.000 rpm (rpm: Umdrehungen pro Minute, auf Englisch "revolutions per minute") beschleunigt werden kann.

Weist ein derartig schnell rotierender Rotor eine Unwucht auf, nämlich weist die Masse des Rotors eine Asymmetrie um die Rotationsachse des Rotors auf, so kann dies zu unerwünschten Vibrationen und erhöhtem Verschleiß bei der elektrischen Maschine führen.

Bei einer solchen elektrischen Maschine ist daher ein Auswuchten des Rotors zwingend erforderlich, um die Vibrationen oder den Verschleiß bei der elektrischen Maschine zu reduzieren beziehungsweise zu vermeiden.

Es wäre denkbar, den Rotor durch gezielte Wegnahme oder Zugabe von Gewichtsmaterial von oder an dem Rotor auszuwuchten, ähnlich wie es bei einem Auswuchten von einem Autoreifen durch Zugabe der Auswuchtgewichte an der Felge geschieht. Die Druckschriften EP 0 168 055 A2, US 2011/074240 A1, JP 2002 01058 A und US 2009/115281 1 beschreiben jeweils Rotoren elektrischer Maschinen, die axiale Ausnehmungen zur Aufnahme von Wuchtmassen aufweisen, wobei die Ausnehmungen mit verschiedenen Querschnittsformen haben können.

Alternativ kann eine gezielte Wegnahme von Gewichtsmaterial von dem Rotor durch gezieltes Fräsen oder Bohren erfolgen. Als nachteilig bei einer derartigen Lösung zum Auswuchten des Rotors stellt sich heraus, dass der Rotor im Vorfeld mit dem zusätzlichen Gewichtsmaterial zu einer späteren gezielten Wegnahme versehen sein muss, was insgesamt zu einem höheren Gewicht des Rotors und somit auch zu höheren Trägheitsmomenten bei der elektrischen Maschine führt.

Eine alternative denkbare Lösung zum Auswuchten des Rotors durch gezielte Zugabe von Gewichtsmaterial, wie zum Beispiel durch Anbringen von Wuchtpasten an dem Rotor, ist mit einem standardisierten oder automatisierten Fertigungsprozess sehr schwierig realisierbar und zudem kostenintensiv.

Somit besteht die Aufgabe der vorliegenden Erfindung darin, eine einfache und kostengünstige Möglichkeit zum Auswuchten eines Rotors einer elektrischen Maschine bereitzustellen.

Diese Aufgabe wird durch den unabhängigen Anspruch gelöst. Vorteilhafte Ausgestaltungen sind Gegenstand der Unteransprüche.

Gemäß einem ersten Aspekt der vorliegenden Erfindung wird eine Rotoranordnung für eine elektrische Maschine, insbesondere eine elektrische Maschine zum Antrieb eines Hybrid- oder Elektrofahrzeugs, geschaffen.

Diese Rotoranordnung umfasst
- einen Rotor mit einer sich in einer axialen Richtung des Rotors erstreckenden Drehachse und zumindest einer ersten, sich parallel zu der Drehachse erstreckenden, von der Drehachse um einen ersten radialen Abstand radial beabstandet angeordneten Ausnehmung, sowie
- zumindest ein erstes Wuchtelement zum Ausgleich einer Unwucht des Rotors bei Drehung um die Drehachse, also zum Ausgleich einer nichtsymmetrischen Verteilung der Masse des Rotors um die Drehachse des Rotors.

Dabei ist das zumindest eine erste Wuchtelement in der zumindest einen ersten Ausnehmung vorgesehen und mittels einer Presssitzverbindung zwischen der zumindest einen ersten Ausnehmung und dem zumindest einen ersten Wuchtelement in der zumindest einen ersten Ausnehmung befestigt.

Hierbei bedeutet die "beabstandete" Anordnung der genannten Ausnehmung von der Drehachse eine Anordnung mit einer räumlichen Entfernung zwischen der Drehachse und der Ausnehmung mit einem Abstand, sodass sich die Drehachse und die Ausnehmung nicht kreuzen.

Dadurch, dass sowohl die Ausnehmungen als auch die Wuchtelemente an sich in standardisierten Fertigungsprozessen hergestellt werden können und die Befestigung der Wuchtelemente in den Ausnehmungen mittels einer einfachen Presssitzverbindung erfolgt, kann eine Rotoranordnung mit einem einfach und kostengünstig ausgewuchteten Rotor bereitgestellt werden. Durch die vorgeformten Ausnehmungen lassen sich zudem das Gewicht des Rotors und die Materialkosten bei dem Rotor sparen. Außerdem weist eine elektrische Maschine mit der Rotoranordnung mit den vorgeformten Ausnehmungen vergleichsweise niedrige Trägheitsmomente auf.

Als Wuchtelemente können dabei vorteilhafterweise standardisierte und somit kostengünstige zylinderförmige Stifte mit einem insbesondere kreisförmigen Querschnitt verwendet werden, welche zum Auswuchten des Rotors gezielt in die entsprechenden Ausnehmungen an dem Rotor eingepresst werden können. Der kreisförmige Querschnitt der zylinderförmigen Wuchtelemente erleichtert die Handhabung der Wuchtelemente bei der Montage beziehungsweise bei dem Einpressen der Wuchtelemente in die Ausnehmungen, da diese in jedem radialen Winkel (bezüglich der Einpressrichtung) in die Ausnehmungen eingeführt und eingepresst werden können.

Der Rotor der Rotoranordnung umfasst zumindest eine zweite, sich parallel zu der Drehachse erstreckende, von der Drehachse um einen von dem ersten radialen Abstand abweichenden, zweiten radialen Abstand radial beabstandet angeordnete Ausnehmung zum Aufnehmen und zum Befestigen eines zweiten Wuchtelements zum Ausgleich einer Unwucht des Rotors bei Drehung um die Drehachse. Dabei weisen die erste und die zweite Ausnehmung unterschiedliche Querschnittformen beziehungsweise unterschiedliche Querschnittflächen auf.

Gemäß einer weiteren bevorzugten Ausgestaltung sind die zumindest eine erste Ausnehmung und die zumindest eine zweite Ausnehmung bezüglich der Drehachse in Drehrichtung voneinander radial winkelversetzt angeordnet sind. Also die zumindest eine erste Ausnehmung und die zumindest eine zweite Ausnehmung sind zueinander bezüglich einer Drehung um die Drehachse winkelversetzt angeordnet.

Die Erfindung bietet den Vorteil, dass eine Unwucht des Rotors durch Anordnen von Wuchtelementen in den unterschiedlich geformten, voneinander radial versetzt liegenden Ausnehmungen mit unterschiedlichen radialen Abständen zu der Drehachse noch präziser ausgewuchtet werden kann.

Gemäß der Erfindung weisen die zumindest eine erste Ausnehmung eine Querschnittfläche auf, welche in ihrer Geometrie zumindest zwei Innenecken mit jeweils einem Innenwinkel umfasst, wobei sich die Winkelsymmetralen aller Innenwinkel in einem Punkt schneiden. Eine derartige Querschnittfläche beziehungsweise Querschnittform bietet eine bessere Presssitzverbindung zwischen einer Ausnehmung und einem in dieser Ausnehmung angeordneten Wuchtelement. Ferner weist der Rotor gemäß der Erfindung eine zweite, sich parallel zu der Drehachse erstreckende, von der Drehachse um einen von dem ersten radialen Abstand abweichenden, zweiten radialen Abstand radial beabstandet angeordnete Ausnehmung zum Aufnehmen und zum Befestigen eines zweiten Wuchtelements auf, wobei die erste und die zweite Ausnehmung unterschiedliche Querschnittformen oder unterschiedliche Querschnittflächen aufweist.

Ferner weist die Querschnittfläche der zumindest einen ersten Ausnehmung und/oder der zumindest einen zweiten Ausnehmung in ihrer Geometrie ein Polygon mit zumindest drei Seiten und zumindest drei Innenecken mit jeweils einem Innenwinkel auf. Dabei schneiden sich die Winkelsymmetralen aller Innenwinkel des Polygons in einem Punkt.

Gemäß einer weiteren bevorzugten Ausgestaltung weist die Querschnittfläche senkrecht zu der Drehachse der Rotoranordnung in ihrer Geometrie ein Polygon mit gleich langen Seiten und gleich großen Innenwinkeln auf.

Gemäß noch einer weiteren bevorzugten Ausgestaltung weist die Querschnittfläche senkrecht zu der Drehachse der Rotoranordnung in ihrer Geometrie zumindest zwei bogenförmigen Kurven auf, welche die Innenecken miteinander verbindenden. Dabei stellen die zumindest zwei bogenförmigen Kurven vorteilhafterweise zwei nach außen gewölbten Bögen dar, deren Enden paarweise verbunden sind. Die Winkelsymmetralen der Innenwinkel der beiden Innenecken schneiden sich vorteilhafterweise in einem Punkt.

Die zuletzt genannten drei bevorzugten Ausgestaltungen bieten unterschiedliche Querschnittflächen beziehungsweise Querschnittformen der Ausnehmung an, welche bei einer Rotoranordnung kombiniert verwendet werden können, um ein präziseres Auswuchten des Rotors zu erzielen.

Gemäß einer weiteren bevorzugten Ausgestaltung weist die Querschnittfläche senkrecht zu der Drehachse der Rotoranordnung an zumindest einer der Innenecken eine Eckenabrundung zur Reduzierung der Kerbspannung bei der zumindest einen ersten Ausnehmung und/oder der zumindest einen zweiten Ausnehmung auf.

Gemäß noch einer weiteren bevorzugten Ausgestaltung weist der Rotor ein Rotorblechpaket umfassend einer Vielzahl von gestanzten Rotorblechscheiben auf, wobei zumindest eine Rotorblechscheibe zumindest ein ausgestanztes Loch aufweist. Nachdem Zusammensetzen der deckungsgleichen Rotorblechscheiben mit ausgestanzten Löchern bilden diese Löcher die zumindest eine erste Ausnehmung aus. Dadurch können die Ausnehmungen bereits beim Herstellen der Rotorblechscheiben einfach und nur mit vernachlässigbaren Mehrkosten durch Ausstanzen entsprechender Löcher aus den Rotorblechscheiben hergestellt werden.

Gemäß einem zweiten Aspekt der vorliegenden Erfindung wird eine elektrische Maschine mit einer oben beschriebenen Rotoranordnung bereitgestellt.

Gemäß der Erfindung wird zumindest ein Wuchtelement in die zumindest eine Ausnehmung zum Ausgleich der Unwucht des Rotors in der Art eingepresst, dass eine Presssitzverbindung zwischen der zumindest einen Ausnehmung und des zumindest einen Wuchtelements entsteht.

Vorteilhafte Ausgestaltungen der oben dargestellten Rotoranordnung sind, soweit im Übrigen auf die oben genannte elektrische Maschine übertragbar, auch als vorteilhafte Ausgestaltungen der elektrischen Maschine beziehungsweise des Verfahrens anzusehen.

Im Folgenden sollen nun beispielhafte Ausführungsformen der vorliegenden Erfindung Bezug nehmend auf die beiliegenden Zeichnungen näher erläutert werden. In den Zeichnungen sind nur die Komponenten beziehungsweise die Verfahrensschritte dargestellt, welche für die Beschreibung der Erfindung relevant sind. Je nach Ausgestaltung können die in den Zeichnungen dargestellten Ausführungsformen weitere in den Zeichnungen nicht dargestellten Komponenten oder Verfahrensschritte aufweisen. Zudem werden die Komponenten, welche die gleiche technische Eigenschaft und die gleiche Funktionalität aufweisen, mit demselben Bezugszeichen versehen. Dabei zeigen:
- Figur 1: eine schematische Explosionsdarstellung einer elektrischen Maschine zur Erläuterung der elektrischen Maschine einschließlich einer Rotoranordnung;
- Figur 2: eine schematische Darstellung einer Rotorscheibe einer Rotoranordnung
- Figur 3: eine schematische Darstellung eines Querschnitts einer Ausnehmung der Rotoranordnung gemäß der Erfindung;
- Figur 4: eine schematische Darstellung eines Querschnitts der Ausnehmung gemäß der Erfindung mit einem eingepressten Wuchtelement senkrecht zu der Drehachse der Rotoranordnung;
- Figur 5: eine schematische Perspektivdarstellung einer Rotoranordnung gemäß der Erfindung schräg zu der Drehachse der Rotoranordnung;
- Figur 6: eine schematische Darstellung eines Querschnitts der Rotoranordnung gemäß der Erfindung;
- Figur 7: eine schematische Darstellung eines Querschnitts einer Ausnehmung einer Variante senkrecht zu der Drehachse der Rotoranordnung;
- Figur 8: eine schematische Darstellung eines Querschnitts der Ausnehmung gemäß Figur 7 mit einem eingepressten Wuchtelement senkrecht zu der Drehachse der Rotoranordnung;
- Figur 9: ein Ablaufdiagramm zum Darstellen eines Herstellungsverfahren einer Rotoranordnung gemäß einer Ausführungsform der Erfindung.

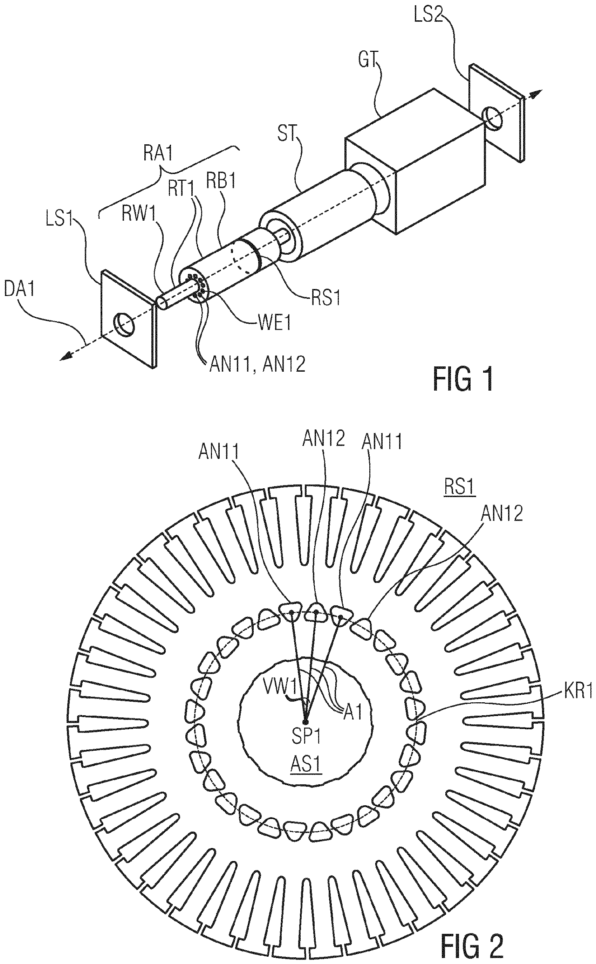

Es sei zunächst auf Figur 1 verwiesen, in der eine elektrische Maschine EM in einer Explosionsdarstellung vereinfacht und schematisch gezeigt ist, welche beispielsweise als Antrieb eines Hybrid- oder Elektrofahrzeugs dient.

Die elektrische Maschine EM umfasst ein Gehäuseteil GT zur Aufnahme eines Stators ST, den Stator ST, eine Rotoranordnung RA1 samt einer Rotorwelle RW1, sowie einen ersten und einen zweiten Lagerschild LS1 und LS2 zum Lagern und Halten der Rotorwelle RW1 . In einem fertig montierten Zustand der elektrischen Maschine EM umschließt das Gehäuseteil GT den Stator ST vollständig und fixiert diesen bewegungsfest. Der Stator ST ist zylinderförmig ausgebildet und weist einen Hohlraum auf, in dem die Rotoranordnung RA1 in dem fertig montierten Zustand der elektrischen Maschine EM drehbar und koaxial zu dem Stator ST gelagert ist. Die elektrische Maschine EM beziehungsweise die Rotoranordnung RA1 weist eine Drehachse DA1 auf, um welche sich die Rotoranordnung RA1 während eines Betriebs der elektrischen Maschine EM dreht und so eine mit der Rotorwelle RW1 zur Drehmomentübertragung mechanisch gekoppelte, in der Figur nicht näher dargestellte Antriebswelle des Fahrzeugs antreibt.

Die Rotoranordnung RA1 umfasst neben der Rotorwelle RW1 noch ein Rotorblechpaket RB1, welches zylinderförmig ausgebildet ist und sich in Richtung der Drehachse DA1 erstreckt. In dem fertig montierten Zustand der elektrischen Maschine EM bilden die Rotorwelle RW1 und das Rotorblechpaket RB1 zusammen den Rotor RT1 aus. Das Rotorblechpaket RB1 weist eine Mehrzahl von Ausnehmungen AN11 und AN12 auf, die sich parallel zu der Drehachse DA1 der Rotoranordnung RA1 erstrecken und um die Drehachse DA1 herum gleichmäßig verteilt angeordnet sind. Diese Ausnehmungen AN11 und AN12 dienen primär zur Aufnahme von Wuchtelementen WE1 und somit zum Ausgleich der eventuell vorhandenen Unwucht des Rotors RT1. Zusätzlich dienen diese Ausnehmungen AN11 und AN12 zur Reduzierung des Gewichts bei der Rotoranordnung RA1 und somit zur Reduzierung von Trägheitsmomenten bei der elektrischen Maschine EM. In einer der Ausnehmungen AN11 und AN12 weist die Rotoranordnung RA1 ein Wuchtelement WE1 zum Ausgleich der Unwucht des Rotors RT1 auf.

Das Rotorblechpaket RB1 umfasst eine Vielzahl von entlang der Drehachse DA1 hintereinander aufgereihten dünnen Rotorblechscheiben RS1. Eine derartige Rotorblechscheibe RS1 wird in Figur 2 näher gezeigt. Demnach ist die Rotorblechscheibe RS1 als eine kreisförmige Blechscheibe mit einem geometrischen Schwerpunkt SP1 als Mittelpunkt ausgebildet und weist in der Kreismitte um den Schwerpunkt SP1 herum eine kreisförmige Aussparung AS1 zur Aufnahme der Rotorwelle RW1 auf. Nach dem Zusammensetzen dieser und einer Vielzahl von weiteren gleichartigen Rotorblechscheiben RS1 zu dem Rotorblechpaket RB1 bilden diese Aussparungen AS1 der Rotorblechscheiben RS1 ein durchgehendes Loch, in dem die Rotorwelle RW1 eingeführt und drehfest fixiert wird.

Von dem Schwerpunkt SP1 radial beabstandet und außerhalb von dem Bereich der Aussparung AS1 weist die Rotorblechscheibe RS1 eine Mehrzahl von Ausnehmungen AN11 und AN12 auf, welche jeweils einen gleichgroßen radialen Abstand A1 zu dem Schwerpunkt SP1 der Rotorblechscheibe RS1 und senkrecht zu der Drehachse DA1 betrachtet eine gleichförmige, an den Ecken abgerundete dreieckige Querschnittfläche QF1 aufweisen. Durch den gleichen radialen Abstand A1 von dem Schwerpunkt SP1 liegen die geometrischen Schwerpunkte sämtlicher Ausnehmungen AN11 und AN12 auf einem fiktiven Kreis KR1 mit dem Schwerpunkt SP1 als Kreismittelpunkt und einem Radius von A1. Dabei bilden die Ausnehmungen AN11 und AN12 eine erste Gruppe von ersten Ausnehmungen AN11 und eine zweite Gruppe von zweiten Ausnehmungen AN12, wobei die ersten Ausnehmungen AN11 der ersten Gruppe und die zweiten Ausnehmungen AN12 der zweiten Gruppe von dem Schwerpunkt SP1 der Rotorblechscheibe RS1 aus in radialen Blickrichtungen betrachtet zueinander abwechselnd senkrecht zu der Blickrichtung gespiegelt und in gleichen Abständen zueinander angeordnet sind. Dadurch liegen die benachbarten Ausnehmungen AN11, AN12 von dem Schwerpunkt SP1 aus radial betrachtet paarweise zueinander um einen gleichen radialen Versatzwinkel VW1 versetzt.

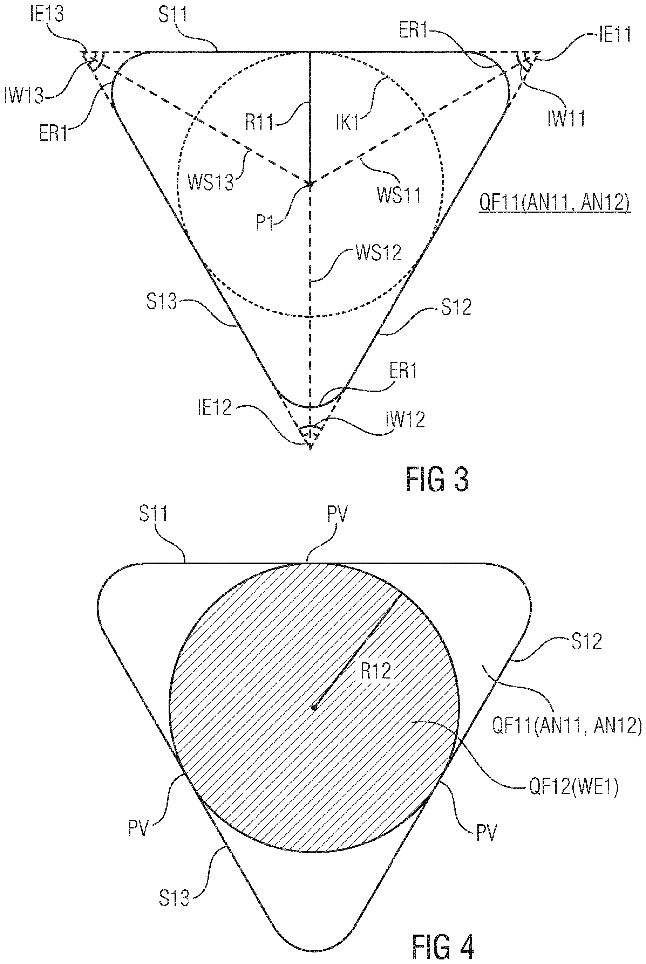

Eine der Ausnehmungen AN11, AN12 ist in Figur 3 detailliert dargestellt. Demnach weisen die Ausnehmungen AN11, AN12 eine gleichförmige Querschnittfläche QF11 in Form von einem gleichseitigen Dreieck mit Eckenabrundungen ER1 auf. Also weist die Querschnittfläche QF11 der Ausnehmungen AN11, AN12 ein gleichseitiges Dreieck mit drei gleich langen Seiten S11, S12 und S13 sowie drei Innenecken IE11, IE12 und IE13 mit jeweils einem gleichgroßen Innenwinkel IW11, IW12 und IW13 auf. Dabei sind die drei Innenecken IE11, IE12 und IE13 durch jeweilige Eckenabrundungen ER1 abgerundet. Aufgrund der Form des gleichseitigen Dreiecks schneiden sich Winkelsymmetralen (also Winkelhalbierenden) WS11, WS12 und WS13 der drei gleichgroßen Innenwinkel IW11, IW12 und IW13 in einem Punkt P1, welcher zugleich geometrischer Schwerpunkt der Querfläche QF11 der Ausnehmungen AN11 und AN12 ist. Mathematisch betrachtet besitzt die Querschnittfläche QF11 somit einen Inkreis IK1 mit einem Radius von R11, welcher zugleich der kürzeste Abstand von dem Punkt P1 zu jeder der drei Seiten S11, S12 und S13 der Querschnittfläche QF11 ist.

In einer oder einigen der Ausnehmungen AN11 und AN12 werden zum Ausgleich der Unwucht des Rotors RT1 je nach Stelle und Stärke der Unwucht Wuchtelemente WE1 eingepresst. So wie eine Querschnittdarstellung einer der Ausnehmungen AN11 und AN12 mit einem eingepressten Wuchtelement WE1 in Figur 4 zeigt, weist das zylinderförmige Wuchtelement WE1 eine kreisförmige Querschnittfläche QF12 mit einem Radius von R12 auf, wobei der Radius R12 der Querschnittfläche QF12 des Wuchtelements WE1 ein wenig, vorteilhafterweise um einen bis mehrere Millimeter, größer ist als der Radius R11 der Querschnittfläche QF11 der Ausnehmungen AN11, AN12, sodass beim Einpressen des Wuchtelements WE1 in die Ausnehmung AN11, AN12 das Wuchtelement WE1 sich elastisch oder elastoplastisch verformt. Durch die Verformung des Wuchtelements WE1 entstehen stabile kraftschlüssige Presssitzverbindungen PV an den Stellen der Linienberührungen beziehungsweise Flächenberührungen zwischen dem Wuchtelement WE1 und der Ausnehmung AN11, AN12, welche das Wuchtelement WE1 bewegungsfest in der Ausnehmung AN11, AN12 festhalten. Durch die Linienberührungen beziehungsweise Flächenberührungen wird ein Freiraum zwischen dem Wuchtelement WE1 und der dieses Wuchtelement WE1 aufnehmenden Ausnehmung AN11 geschaffen, in den das überschüssige, durch die Verformung des Wuchtelements WE1 infolge der Presssitzverbindung PV verdrängte Material vom Wuchtelement WE1 fließen kann. Durch derartige Presssitzverbindung PV lassen sich auch die Fertigungstoleranzen zwischen den Wuchtelementen WE1 und den Ausnehmungen AN11, AN12 kompensieren.

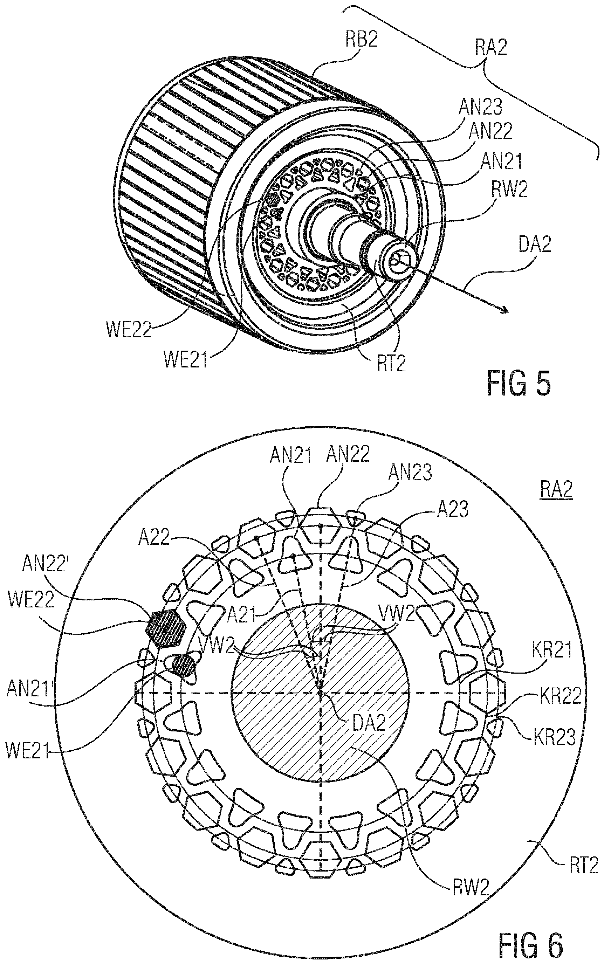

Nachdem die Rotoranordnung RA1 mithilfe der Figuren 1 bis 4 detailliert beschrieben wurde, sei nun auf Figuren 5 und 6 verwiesen, welche eine Rotoranordnung RA2 einer elektrischen Maschine gemäß der Erfindung in einer schematischen Perspektivdarstellung schräg zur Drehachse DA2 der Rotoranordnung RA2 und in einem Querschnitt senkrecht zur Drehachse DA2 der Rotoranordnung RA2 zeigen.

Demnach weist die Rotoranordnung RA2 einen Rotor RT2 und zwei Wuchtelemente WE21 und WE22 auf. Der Rotor RT2 umfasst ein Rotorblechpaket RB2 und eine mit dem Rotorblechpaket RB2 drehfest verbundene Rotorwelle RW2. Beim Betrieb dreht sich der Rotor RT2 um eine Drehachse DA2, welche sich mittig durch die Rotorwelle RW2 in axiale Richtung der Rotorwelle RW2 erstreckt.

Das Rotorblechpaket RB2 weist eine Vielzahl von Ausnehmungen AN21, AN22 und AN23 auf, die an dem Rotorblechpaket RB2 um die Rotorwelle RW2 herum gleichmäßig verteilt und sich parallel zu der Drehachse DA2 erstreckend ausgeformt sind.

Dabei lassen sich diese Ausnehmungen AN21, AN22 und AN23 je nach deren Querschnittform und deren Abstand zu der Drehachse DA2 in drei Gruppen unterteilen. So bilden die ersten Ausnehmungen AN21 mit einer jeweils gleichen, dreieckigen und vergleichsweise großflächigen Querschnittform eine erste Gruppe von Ausnehmungen AN21, wobei die Ausnehmungen AN21 dieser ersten Gruppe mit einem ersten und gleichen radialen Abstand A21 von der Drehachse DA2 des Rotors RT2 zu dem geometrischen Schwerpunkt der jeweiligen Ausnehmungen AN21 radial beabstandet angeordnet sind. Damit liegen die erste Gruppe von Ausnehmungen AN21, beziehungsweise deren geometrische Schwerpunkte, auf einem ersten fiktiven Kreis K21. Die zweiten Ausnehmungen AN22 mit einer jeweils gleichen, sechseckigen Querschnittform bilden eine zweite Gruppe von Ausnehmungen AN22, wobei die Ausnehmungen AN22 dieser zweiten Gruppe mit einem zweiten und gleichen radialen Abstand A22 von der Drehachse DA2 zu dem geometrischen Schwerpunkt der jeweiligen Ausnehmungen AN22 radial beabstandet angeordnet sind. Damit liegen die zweite Gruppe von Ausnehmungen AN22, beziehungsweise deren geometrische Schwerpunkte, auf einem zweiten fiktiven Kreis K22. Die dritten Ausnehmungen AN23 mit einer jeweils gleichen, dreieckigen und vergleichsweise kleinflächigen Querschnittform bilden eine dritte Gruppe von Ausnehmungen AN22, wobei die Ausnehmungen AN23 dieser dritten Gruppe mit einem dritten und gleichen radialen Abstand A23 von der Drehachse DA2 zu dem geometrischen Schwerpunkt der jeweiligen Ausnehmungen AN23 radial beabstandet angeordnet sind. Damit bilden die dritte Gruppe von Ausnehmungen AN23, beziehungsweise deren geometrische Schwerpunkte, einen dritten fiktiven Kreis K23. Also weisen die Ausnehmungen AN21, AN22 und AN23 mit denen in der jeweiligen gleichen Gruppe gleichen aber von denen der jeweils anderen Gruppen abweichenden Querschnittformen und Querschnittflächen auf. Zudem liegen die Ausnehmungen AN21, AN22 und AN23 der Rotoranordnung RA2 gemäß der Erfindung anders als bei der in Figuren 1 bis 4 dargestellten Rotoranordnung RA1 gemäß des Stands der Technik in verschiedenen radialen Abständen A21, A22 und A23 von der Drehachse DA2 entfernt. Außerdem sind die Ausnehmungen AN21, AN22 und AN23 unterschiedlicher Gruppen teilweise voneinander radial winkelversetzt angeordnet. So weisen die geometrischen Schwerpunkte zweier unterschiedlichen, nebeneinander angeordneten Ausnehmungen AN21 und AN22 der ersten und der zweiten Gruppe, beziehungsweise AN22 und AN23 der zweiten und der dritten Gruppe zueinander bezüglich einer Drehung um die Drehachse DA2 der Rotoranordnung RA2 gleiche Versatzwinkel VW2 auf. Dagegen liegen die geometrischen Schwerpunkte zweier unterschiedlichen Ausnehmungen AN21 und AN23 der ersten und der dritten Gruppe auf einer derselben, von der Drehachse DA2 aus radial erstreckenden Linie. Zusammengefasst sind die Ausnehmungen AN21, AN22 und AN23 von der Drehachse DA2 der Rotoranordnung RA2 voneinander sowohl radial als auch tangential in Drehrichtung versetzt angeordnet. Eine derartige Ausführung hat den Vorteil, dass eine Unwucht des Rotors RT2 durch Anordnen von Wuchtelementen WE21, WE22 unterschiedlicher Massen in den unterschiedlichen Ausnehmungen AN21, AN22, AN23 mit unterschiedlichen radialen Abständen A21, A22, A23 zu der Drehachse DA2 noch feiner ausgewuchtet werden kann. Somit verleiht eine derartige versetzte Anordnung der Ausnehmungen AN21, AN22, AN23 der Rotoranordnung RA2 bessere Ergebnisse bei dem Ausgleichen der Unwucht des Rotors RT2.

In zwei der Ausnehmungen AN21 und AN22, nämlich AN21' und AN22' , ist zum Ausgleich der Unwucht des Rotors RT2 jeweils ein Wuchtelement WE21 und WE22 bewegungsfest eingepresst. Dabei weisen die zylinderförmigen Wuchtelemente WE21 und WE22 jeweils eine kreisförmige Querschnittfläche mit einem Radius auf, welcher ein wenig, vorteilhafterweise um einen bis mehrere Millimeter, größer ist als der Radius der Querschnittfläche der jeweiligen Ausnehmungen AN21', AN22', sodass beim Einpressen der Wuchtelemente WE21, WE22 in die jeweiligen Ausnehmungen AN21', AN22' die Wuchtelemente WE21, WE22 sich elastisch oder elastoplastisch verformen und so stabile kraftschlüssige Presssitzverbindungen PV an den Stellen der Linienberührung zwischen den Wuchtelementen WE21, WE22 und den jeweiligen Ausnehmungen AN21', AN22' entstehen, welche die Wuchtelemente WE21, WE22 bewegungsfest in den jeweiligen Ausnehmungen AN21', AN22' festhalten.

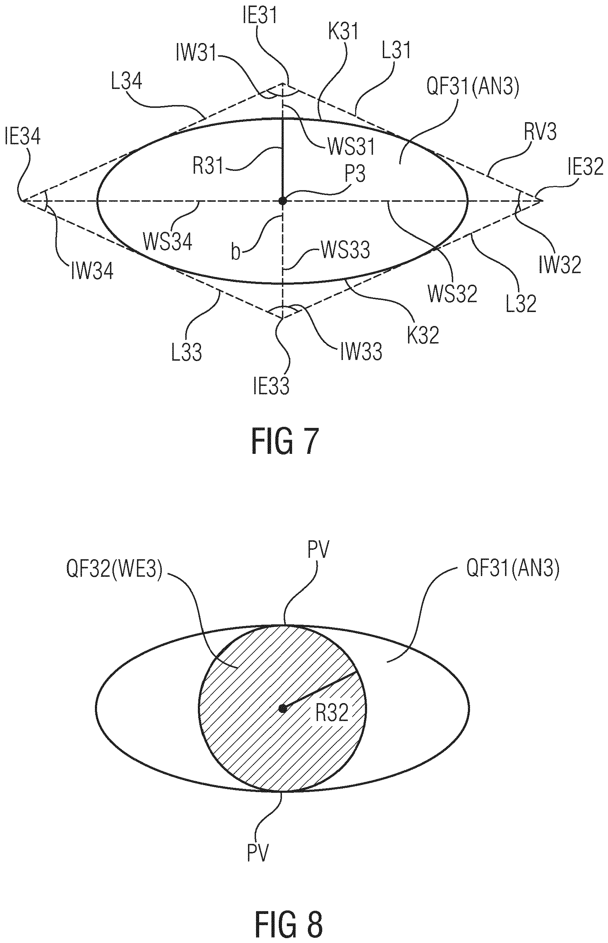

Nun sei auf Figuren 7 und 8 verwiesen, welche eine Querschnittfläche QF31 einer Ausnehmung AN3 einer alternativen Variante für eine der oben beschriebenen Rotoranordnungen RA1, RA2 ohne beziehungsweise mit einem eingepressten Wuchtelement WE3 schematisch zeigen.

Dabei zeigt Figur 7 eine Querschnittfläche QF31 der Ausnehmung AN3 ohne Wuchtelement senkrecht zu der Drehachse DA1 oder DA2 der Rotoranordnung RA1 oder RA2. Demnach wird die Querschnittfläche QF31 durch zwei gleichartigen bogenförmigen Kurven K31 und K32 definiert und weist eine Form einer Ellipse auf, wobei vier gleich langen Ellipsentangentenlinien L31, L32, L33 und L34, die sich mit der Ellipsenkurve K31 und K32 tangential berühren und zueinander paarweise schneiden, einen rautenförmigen Viereck RV3 bilden. Damit bildet die ellipsenförmige Querschnittfläche QF31 der Ausnehmung AN3 eine In-Ellipse dieses rautenförmigen Vierecks RV3 aus (ähnlich wie das Prinzip eines In-Kreises eines Vierecks). Das rautenförmige Viereck RV3 weist vier Innenecken IE31, IE32, IE33 und IE34 mit jeweils einem Innenwinkel IW31, IW32, IW33 und IW34. Die vier Winkelsymmetralen WS31, WS32, WS33 und WS34 dieser vier Innenwinkel IE31, IE32, IE33 und IE34 schneiden sich zu einem Punkt P3, welcher zugleich geometrischer Schwerpunkt der Querschnittfläche QF31 ist. Die beiden Kurven K31 und K32, beziehungsweise Ellipsentangentenlinien L31, L32, L33 und L34 dieser beiden Kurven K31 und K32, verbinden somit zwei der Innenecken IE32, IE34 miteinander. Der kleinste Abstand von diesem Schwerpunkt P3 zu den jeweiligen Kurven K31 und K32 hat eine Länge von der Hälfte der kleinen Halbachse b der ellipsenförmigen Querschnittfläche QF31. Nachfolgend wird dieser kleinste Abstand keiner Radius R31 der ellipsenförmigen Querschnittfläche QF31 genannt.

Zum Ausgleich der Unwucht der Rotoranordnung werden je nach Unwucht in einer oder einigen der Ausnehmungen AN3 Wuchtelemente WE3 eingepresst. So wie Figur 8 zeigt, weist das zylinderförmige Wuchtelement WE3 eine kreisförmige Querschnittfläche QF32 mit einem Radius von R32 auf, wobei der Radius R32 der Querschnittfläche QF32 des Wuchtelements WE3 ein wenig, vorteilhafterweise um einen bis mehrere Millimeter, größer ist als der kleine Radius R31 der Querschnittfläche QF31 der Ausnehmung AN3, sodass beim Einpressen des Wuchtelements WE3 in die Ausnehmung AN3 das Wuchtelement WE3 sich elastisch oder elastoplastisch verformt und so stabile kraftschlüssige Presssitzverbindungen PV an den Stellen der Linienberührungen beziehungsweise Flächenberührungen zwischen dem Wuchtelement WE3 und der Ausnehmung AN3 entstehen, welche das Wuchtelement WE3 bewegungsfest in der Ausnehmung AN3 festhalten.

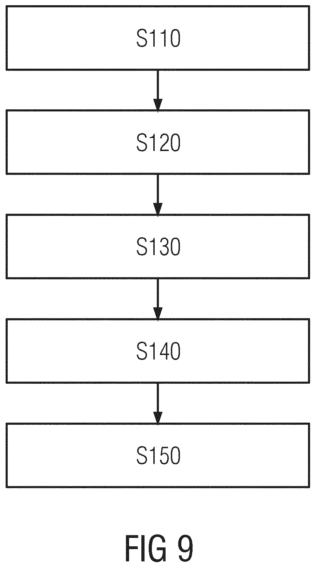

Nachdem drei Beispiele gemäß des Stands der Technik und gemäß der Erfindung der Rotoranordnung mithilfe von Figuren 1 bis 8 detailliert beschrieben wurden, sei nun auf Figur 9 verwiesen, in der ein beispielhaftes Verfahren zur Herstellung einer in Figuren 1 bis 4 dargestellten Rotoranordnung RA1 in einem Ablaufdiagramm schematisch dargestellt ist.

Zunächst wird gemäß einem ersten Verfahrensschritt S110 eine Mehrzahl von gleichartigen Blechscheiben RS1 mit jeweils einem geometrischen Schwerpunkt SP1 als Mittelpunkt bereitgestellt, wobei durch diesen Schwerpunkt SP1 nach dem Zusammenbau der Rotoranordnung RA1 die Drehachse DA1 der Rotoranordnung RA1 durchläuft. Diese Blechscheiben RS1 können zum Beispiel durch Ausstanzen aus einer dünnen Metallplatte hergestellt werden. Vorteilhaftweise kann bei dem Ausstanzen der Blechscheiben RS1 zugleich bei jeder Blechscheibe RS1 jeweils ein kreisförmiges Loch mit dem Schwerpunkt SP1 der jeweiligen Blechscheibe RS1 als Kreismittelpunkt ausgestanzt werden. Die Löcher bilden nach dem Zusammensetzen der Blechscheiben RS1 zu dem Rotorblechpakt RB1 eine durchgehende Aussparung zur Aufnahme und zum Befestigen einer Rotorwelle RW1.

An zumindest einer Blechscheibe RS1 beziehungsweise an einer Vielzahl von den Blechscheiben RS1 werden gemäß einem zweiten Verfahrensschritt S120 zumindest ein oder mehrere Löcher radial von dem Schwerpunkt SP1 beziehungsweise von dem kreisförmigen Loch mit dem Schwerpunkt SP1 als Kreismittelpunkt beabstandet herausgetrennt.

Anschließend werden gemäß einem dritten Verfahrensschritt S130 die Blechscheiben RS1 zu einem Rotorblechpaket RB1 in der Art deckungsgleich zusammengesetzt, dass durch die jeweiligen Löcher der Blechscheiben RS1 an dem Rotorblechpaket RB1 Ausnehmungen AN11, AN12 zur Aufnahme von Wuchtelementen WE1 ausgebildet werden.

Danach wird gemäß einem vierten Verfahrensschritt S140 in das Loch des Rotorblechpakets RB1 eine Rotorwelle RW1 eingeführt und drehfest mit dem Rotorblechpaket RB1 fixiert, sodass ein Rotorwelle-Rotorblechpaket-Aufbau gebildet wird.

Hat der Rotorwelle-Rotorblechpaket-Aufbau eine Unwucht in der Drehung um die Drehachse DA1, so wird diese mithilfe von einem oder mehreren Wuchtelementen WE1 ausgeglichen. Zum Ausgleichen der Unwucht des Rotorwelle-Rotorblechpaket-Aufbaus werden je nach Position und Stärke der Unwucht ein oder mehrere Wuchtelemente WE1 gemäß einem anschließenden Verfahrensschritt S150 in die entsprechenden Ausnehmungen AN11 in einem Presssitzverfahren eingepresst, sodass zwischen den jeweiligen Ausnehmungen AN11 und den entsprechenden Wuchtelementen WE1 Presssitzverbindungen gebildet werden, wodurch die Wuchtelemente WE1 von den Ausnehmungen AN11 bewegungsfest gehalten werden.

### Bezugszeichenliste

- EM: Elektrische Maschine
- GT: Gehäuseteil
- ST: Stator
- RA1, RA2: Rotoranordnung
- RT1, RT2: Rotor
- RW1, RW2: Rotorwelle
- RB1, RB2: Rotorblechpaket
- LS1, LS2: Lageschild
- DA1, DA2: Drehachse
- RS1: Rotorblechscheibe
- AN11, AN12, AN21, AN22,: Ausnehmung
- AN23, AN21', AN22', AN3 WE1, WE21, WE22, WE3: Wuchtelement
- VW1, VW2: Versatzwinkel zweier benachbarten Ausnehmungen
- SP1: Schwerpunkt einer Rotorblechscheibe
- AS1: Aussparung an einer Rotorblechscheibe
- A1, A21, A22, A23: Radialer Abstand von den Ausnehmungen zur Drehachse
- KR1, KR21, K22, KR23: Fiktiver Kreis, auf dem die Ausnehmungen liegen
- QF11, QF31: Querschnittfläche einer Ausnehmung
- QF12, QF32: Querschnittfläche eines Wuchtelements
- ER1: Eckenabrundung einer Querschnittfläche einer Ausnehmung
- S11, S12, S13: Seite einer Querschnittfläche einer Ausnehmung
- IE11, IE12, IE13, IE31,: Innenecke einer Querschnittfläche
- IE32, IE33, IE34: einer Ausnehmung
- IW11, IW12, IW13, IW31,: Innenwinkel der Innenecke der
- IW32, IW33, IW34: Querschnittfläche einer Ausnehmung
- WS11, WS12, WS13, WS31,: Winkelsymmetrale der Innenwinkel
- WS32, WS33, WS34 L31, L32, L33, L34: Ellipsentangentenlinien einer Querschnittfläche einer Ausnehmung
- P1, P3: Geometrischer Schwerpunkt einer Querschnittfläche einer Ausnehmung
- IK1: Fiktiver Inkreis einer Querschnittfläche einer Ausnehmung
- R11: Radius des fiktiven Inkreises einer Querschnittfläche einer Ausnehmung
- b: kleinen Halbachse einer Querschnittfläche
- R31: Kleiner Radius einer Querschnittfläche einer Ausnehmung
- R12, R32: Radius einer Querschnittfläche eines Wuchtelements
- PV: Presssitzverbindung
- K31, K32: Bogenförmige Kurve
- RV3: Rautenförmiges Viereck

## Patentansprüche

1. Rotoranordnung (RA1, RA2) für eine elektrische Maschine (EM), welche folgende Merkmale aufweist:
• einen Rotor (RT1, RT2) mit einer sich in einer axialen Richtung des Rotors (RT1, RT2) erstreckenden Drehachse (DA1, DA2) und zumindest einer ersten, sich parallel zu der Drehachse (DA1, DA2) erstreckenden, von der Drehachse (DA1, DA2) um einen ersten radialen Abstand (A1, A21) radial beabstandet angeordneten Ausnehmung (AN11, AN12, AN21, AN21', AN3),
• zumindest ein erstes Wuchtelement (WE1, WE21, WE3) zum Ausgleich einer Unwucht des Rotors (RT1, RT2) bei Drehung um die Drehachse (DA1, DA2),
• wobei das zumindest eine erste Wuchtelement (WE1, WE21, WE3) in der zumindest einen ersten Ausnehmung (AN11, AN12, AN21, AN21', AN3) vorgesehen ist und mittels einer Presssitzverbindung (PV) zwischen der zumindest einen ersten Ausnehmung (AN11, AN12, AN21, AN21', AN3) und dem zumindest einen ersten Wuchtelement (WE1, WE21, WE3) in der zumindest einen ersten Ausnehmung (AN11, AN12, AN21, AN21', AN3) befestigt ist, wobei
• bei der die zumindest eine erste Ausnehmung (AN11, AN12, AN21, AN21', AN3) eine Querschnittfläche (QF11, QF31) aufweisen, welche in ihrer Geometrie zumindest zwei Innenecken (IE11, IE12, IE13; IE31, IE32, IE33, IE34) mit jeweils einem Innenwinkel (IW11, IW12, IW13; IW31, IW32, IW33, IW34) umfasst, wobei sich Winkelsymmetralen (WS11, WS12, WS13; WS31, WS32, WS33, WS34) aller Innenwinkel (IW11, IW12, IW13; IW31, IW32, IW33, IW34) in einem Punkt (P1, P3) schneiden und wobei
• der Rotor (RT1, RT2) ferner zumindest eine zweite, sich parallel zu der Drehachse (DA1, DA2) erstreckende, von der Drehachse (DA1, DA2) um einen von dem ersten radialen Abstand (A21) abweichenden, zweiten radialen Abstand (A22, A23) radial beabstandet angeordnete Ausnehmung (AN22, AN22', AN23) zum Aufnehmen und zum Befestigen eines zweiten Wuchtelements (WE22) zum Ausgleich einer Unwucht des Rotors (RT1, RT2) bei Drehung um die Drehachse (DA1, DA2) aufweist und erste und die zweite Ausnehmung unterschiedliche Querschnittformen oder unterschiedliche Querschnittflächen aufweist.

2. Rotoranordnung (RA1, RA2) nach Anspruch 1, bei der die zumindest eine erste Ausnehmung (AN21, AN21') und die zumindest eine zweite Ausnehmung (AN22, AN22') bezüglich der Drehachse (DA1, DA2) in Drehrichtung voneinander radial winkelversetzt (VW2) angeordnet sind.

3. Rotoranordnung (RA1, RA2) nach einem der vorangehenden Ansprüche, bei der die Querschnittfläche (QF11) in ihrer Geometrie ein Polygon mit zumindest drei Seiten (S1, S2, S3) und zumindest drei Innenecken (IE11, IE12, IE13) mit jeweils einem Innenwinkel (IW11, IW12, IW13) aufweist.

4. Rotoranordnung (RA1, RA2) nach Anspruch 3, bei der die Querschnittfläche (QF11) in ihrer Geometrie ein Polygon mit gleich langen Seiten (S1, S2, S3) und gleich großen Innenwinkeln (IW11, IW12, IW13) aufweist.

5. Rotoranordnung (RA1, RA2) nach einem der vorangehenden Ansprüche, bei der die Querschnittfläche (QF3, QF4) in ihrer Geometrie zumindest zwei bogenförmigen Kurven (K31, K32) aufweist, welche die Innenecken (IE32, IE34) miteinander verbindenden.

6. Rotoranordnung (RA1, RA2) nach einem der vorangehenden Ansprüche, bei der die Querschnittfläche (QF11, QF31) an zumindest einer der Innenecken (IE11, IE12, IE13, IE32, IE34) eine Eckenabrundung (ER1) zur Reduzierung der Kerbspannung bei der zumindest einen ersten Ausnehmung (AN11, AN12, AN21, AN21', AN3) und/oder der zumindest einen zweiten Ausnehmung (AN22, AN22', AN23) aufweist.

7. Rotoranordnung (RA1, RA2) nach einem der vorangehenden Ansprüche, bei der der Rotor (RT1, RT2) ein Rotorblechpaket (RB1, RB2) umfassend eine Vielzahl von gestanzten Rotorblechscheiben (RS1) aufweist, wobei zumindest eine Rotorblechscheibe (RS1) ein gestanztes Loch aufweist, welches die zumindest eine erste Ausnehmung (AN11, AN12, AN21, AN21', AN3) bildet.

8. Elektrische Maschine (EM) mit einer Rotoranordnung (RA1, RA2) nach einem der vorangehenden Ansprüche.

## Claims

1. Rotor arrangement (RA1, RA2) for an electric machine (EM), which rotor arrangement (RA1, RA2) has the following features:
• a rotor (RT1, RT2) with a rotational axis (DA1, DA2) which extends in an axial direction of the rotor (RT1, RT2), and with at least one first recess (AN11, AN12, AN21, AN21', AN3), extending parallel to the rotational axis (DA1, DA2), which is arranged spaced apart radially from the rotational axis (DA1, DA2) by a first radial spacing (A1, A21),
• at least one first balancing element (WE1, WE21, WE3) for the compensation of an unbalance of the rotor (RT1, RT2) in the case of rotation about the rotational axis (DA1, DA2),
• the at least one first balancing element (WE1, WE21, WE3) being provided in the at least one first recess (AN11, AN12, AN21, AN21', AN3), and being fastened in the at least one first recess (AN11, AN12, AN21, AN21', AN3) by means of a press fit connection (PV) between the at least one first recess (AN11, AN12, AN21, AN21', AN3) and the at least one first balancing element (WE1, WE21, WE3),
• in the case of which rotor element (RA1, RA2) the at least one first recess (AN11, AN12, AN21, AN21', AN3) having a cross-sectional area (QF11, QF31), the geometry of which comprises at least two internal corners (IE11, IE12, IE13; IE31, IE32, IE33, IE34) with in each case one internal angle (IW11, IW12, IW13; IW31, IW32, IW33, IW34), the angle bisectors (WS11, WS12, WS13; WS31, WS32, WS33, WS34) of all the internal angles (IW11, IW12, IW13; IW31, IW32, IW33, IW34) intersecting at one point (P1, P3), and
• the rotor (RT1, RT2) having, furthermore, at least one second recess (AN22, AN22', AN23) which extends parallel to the rotational axis (DA1, DA2) and is arranged spaced radially apart from the rotational axis (DA1, DA2) by a second radial spacing (A22, A23) which differs from the first radial spacing (A21), for receiving and for fastening a second balancing element (WE22) for the compensation of an unbalance of the rotor (RT1, RT2) in the case of rotation about the rotational axis (DA1, DA2), and having first cross-sectional shapes or cross-sectional areas which differ from the second recess.

2. Rotor arrangement (RA1, RA2) according to Claim 1, in the case of which the at least one first recess (AN21, AN21') and the at least one second recess (AN22, AN22') are arranged in a radially angular offset (VW2) from one another in the rotational direction with regard to the rotational axis (DA1, DA2) .

3. Rotor arrangement (RA1, RA2) according to either of the preceding claims, in the case of which the geometry of the cross-sectional area (QF11) has a polygon with at least three sides (S1, S2, S3) and at least three internal corners (IE11, IE12, IE13) with in each case one internal angle (IW11, IW12, IW13) .

4. Rotor arrangement (RA1, RA2) according to Claim 3, in the case of which the geometry of the cross-sectional area (QF11) has a polygon with equally long sides (S1, S2, S3) and internal angles (IW11, IW12, IW13) of identical magnitude.

5. Rotor arrangement (RA1, RA2) according to one of the preceding claims, in the case of which the geometry of the cross-sectional area (QF3, QF4) has at least two arcuate curves (K31, K32) which connect the internal corners (IE32, IE34) to one another.

6. Rotor arrangement (RA1, RA2) according to one of the preceding claims, in the case of which, on at least one of the internal corners (IE11, IE12, IE13, IE32, IE34), the cross-sectional area (QF11, QF31) has a corner radius (ER1) for the reduction of the notch stress in the case of the at least one first recess (AN11, AN12, AN21, AN21', AN3) and/or the at least one second recess (AN22, AN22', AN23).

7. Rotor arrangement (RA1, RA2) according to one of the preceding claims, in the case of which the rotor (RT1, RT2) has a rotor laminated core (RB1, RB2) comprising a multiplicity of punched rotor sheet-metal discs (RS1), at least one rotor sheet-metal disc (RS1) having a punched hole which forms the at least one first recess (AN11, AN12, AN21, AN21', AN3).

8. Electric machine (EM) with a rotor arrangement (RA1, RA2) according to one of the preceding claims.

## Revendications

1. Ensemble rotor (RA1, RA2) pour une machine électrique (EM) présentant les particularités suivantes :
• un rotor (RT1, RT2) ayant un axe de rotation (DA1, DA2) s'étendant dans une direction axiale du rotor (RT1, RT2) et au moins un premier évidement (AN11, AN12, AN21, AN21', AN3) s'étendant en parallèle à l'axe de rotation (DA1, DA2) et disposé de manière radialement espacée d'une première distance radiale (A1, A21) par rapport à l'axe de rotation (DA1, DA2),
• au moins un premier élément d'équilibrage (WE1, WE21, WE3) servant à compenser un balourd du rotor (RT1, RT2) en cas de rotation autour de l'axe de rotation (DA1, DA2),
• ledit au moins un premier élément d'équilibrage (WE1, WE21, WE3) étant prévu dans ledit au moins un premier évidement (AN11, AN12, AN21, AN21', AN3) et étant fixé au moyen d'un emmanchement à force (PV) entre ledit au moins un premier évidement (AN11, AN12, AN21, AN21', AN3) et ledit au moins un premier élément d'équilibrage (WE1, WE21, WE3) dans ledit au moins un premier évidement (AN11, AN12, AN21, AN21', AN3),
• dans lequel ledit au moins un premier évidement (AN11, AN12, AN21, AN21', AN3) présente une superficie de la section (QF11, QF31) qui comprend dans sa géométrie au moins deux coins intérieurs (IE11, IE12, IE13 ; IE31, IE32, IE33, IE34) avec respectivement un angle intérieur (IW11, IW12, IW13 ; IW31, IW32, IW33, IW34), les bissectrices (WS11, WS12, WS13 ; WS31, WS32, WS33, WS34) de tous les angles intérieurs (IW11, IW12, IW13 ; IW31, IW32, IW33, IW34) se coupant dans un point (P1, P3), et dans lequel
• le rotor (RT1, RT2) présente en outre au moins un deuxième évidement (AN22, AN22', AN23) s'étendant en parallèle à l'axe de rotation (DA1, DA2) et disposé de manière radialement espacée d'une deuxième distance radiale (A22, A23) différente de la première distance (A21) par rapport à l'axe de rotation (DA1, DA2), pour recevoir et pour fixer un deuxième élément d'équilibrage (WE22) servant à compenser un balourd du rotor (RT1, RT2) lors d'une rotation autour de l'axe de rotation (DA1, DA2), et le premier et le deuxième évidement présentent différentes formes de section transversale ou différentes superficies de la section.

2. Ensemble rotor (RA1, RA2) selon la revendication 1, dans lequel ledit au moins un premier évidement (AN21, AN21') et ledit au moins un deuxième évidement (AN22, AN22') sont disposés l'un par rapport à l'autre avec un décalage d'angle radial (VW2) par rapport à l'axe de rotation (DA1, DA2) dans la direction de rotation.

3. Ensemble rotor (RA1, RA2) selon l'une quelconque des revendications précédentes, dans lequel la superficie de la section (QF11) présente dans sa géométrie un polygone ayant au moins trois faces (S1, S2, S3) et au moins trois coins intérieurs (IE11, IE12, IE13) avec respectivement un angle intérieur (IW11, IW12, IW13).

4. Ensemble rotor (RA1, RA2) selon la revendication 3, dans lequel la superficie de la section (QF11) présente dans sa géométrie un polygone ayant des faces de même longueur (S1, S2, S3) et des angles intérieurs (IW11, IW12, IW13) identiques.

5. Ensemble rotor (RA1, RA2) selon l'une quelconque des revendications précédentes, dans lequel la superficie de la section (QF3, QF4) présente dans sa géométrie au moins deux courbes en forme d'arc (K31, K32) qui relient les coins intérieurs (IE32, IE34) les uns aux autres.

6. Ensemble rotor (RA1, RA2) selon l'une quelconque des revendications précédentes, dans lequel la superficie de la section (QF11, QF31) présente à au moins l'un des coins intérieurs (IE11, IE12, IE13, IE32, IE34) un arrondi de coin (ER1) servant à réduire la contrainte d'entaille au niveau du au moins un premier évidement (AN11, AN12, AN21, AN21', AN3) et/ou du au moins un deuxième évidement (AN22, AN22', AN23).

7. Ensemble rotor (RA1, RA2) selon l'une quelconque des revendications précédentes, dans lequel le rotor (RT1, RT2) présente un paquet de tôles de rotor (RB1, RB2) comprenant une pluralité de disques de tôle de rotor estampés (RS1), et au moins un disque de tôle de rotor estampé (RS1) présentant un trou estampé qui forme ledit au moins un premier évidement (AN11, AN12, AN21, AN21', AN3).

8. Machine électrique (EM) comprenant un ensemble rotor (RA1, RA2) selon l'une quelconque des revendications précédentes.
